Europäisches Patentamt

European Patent Office

Office européen des brevets

(19)

(11) Publication number: **0 067 243**
A1

# (12) EUROPEAN PATENT APPLICATION

(21) Application number: **81104721.6**

(22) Date of filing: **19.06.81**

(51) Int. Cl.³: **A 01 B 29/00**
**E 01 C 19/26**

(43) Date of publication of application:
**22.12.82 Bulletin 82/51**

(84) Designated Contracting States:
**AT CH DE FR GB IT LI**

(71) Applicant: **Vernocchi, Luciano**
**Via Nuova, 4781**
**I-40059 Medicina (Bologna)(IT)**

(72) Inventor: **Vernocchi, Luciano**
**Via Nuova, 4781**
**I-40059 Medicina (Bologna)(IT)**

(74) Representative: **Sassatelli, Franco**
**c/o INIP Ufficio Internazionale Brevetti per Deposito di**
**Brevetti e Marchi via Mazzini, 170**
**I-40139 Bologna(IT)**

(54) Self-propelled compressor for agricultural workings.

(57) Self-propelled compressing machine for agricultural work with isosceles triangular base frame (1) and ailerons (2, 3) symmetrically diverging when lowering on the rear part for supporting on articulated joints (7, 8) a spaced couple of line frames (9, 10) bearing a roller couple on side supports (13, 14) with triangular base.

The driving device is completed by a third roller (22) borne by a casing on an articulated joint (19) and supported by a turning emplacement (17) enabling the manoeuvrability. The employ of the rollers as driving device permits: a balancing base with isosceles trapezoidal form that allows a high stability against upsetting and the ribbon compression of the ground with consequent uniformly distributed load.

The employ of the three movement devices on the frame with articulated joints permits adjustability to the ground slants.

In particular the towing means is excluded. In order to increase the power, the three rollers are separately motorized.

FIG. 3

FIG. 2

EP 0 067 243 A1

- 1 -

"Self-propelled compressor for agricultural workings"

The invention refers to a self-propelled compressing machine for a gricultural workings which substantially employs a rolled steel se ction frame with isosceles triangular base bearing a system of three rollers, on articulated joints, two of which are laid on a rear line, whereas the third one lies on a central front position on a rotating emplacement in order to permit the manoeuvrability by means of steering wheel.

The employ of the rollers allows: a contact balancing base to the ground, with isosceles trapezium form, assuring a high stability against overturning and the ribbon compression of the ground which allows to transmit to it a uniformly distributed charge. The roller support on articulated joints permits to maintain the constant adhesion to the ground of the motion device components by adjusting the rollers to its changing slants.

Another feature consists in the employ of three different driving devices on the three rollers, a condition that permits to increase the directional capacities of the means and, therefore, the capacity of overcoming the critical transit phases. In the conventional operations for the agricultural ground levelling, as for instance when levelling the ground after seeding, at present the levelling device must be towed by means of a tractor.

To obviate the inconveniences caused by furrows made by the tract-

or wheels, cylindrical reticular base wheels are used. This does not prevent to them, according to the weight concentration of the same wheels on the ground, to change the seed position on the stripes of their passage, damaging in this way cultures. These problems are obviated by invention which mainly permits to carry out a means of limited weight, easy manoeuvrability and high stability effect to reversing, which further permits to obviate the use of the tractor and avoids damage to the sown ground. This is possible thanks to the fact that a frame with isosceles triangle base is foreseen consisting of a front section structure which, on the upper side, forms the supporting base of the devices in the steerage station.

As rear prosecution, the frame employs a couple of ailerons symmetrically diverging towards below and gradually wider when opening to bear on the vertices of the frame end part, by means of articulated joints, a symmetrical couple of frames on a line, each of which on a couple of triangular supports bears one of the two rollers the rear part of driving device are consisting of. The said device is completed by a third roller supported on the casing by a couple of triangular supports and with articulated joint to the frame central front part, as well as employ of turning emplacement to permit manoeuvrability.

To allow power increase of the means and particularly of the movement capacities in multidirectional sense, several hydraulical motors have been foreseen on the three movement devices driven by a motor assembly with a changing delivery pump.

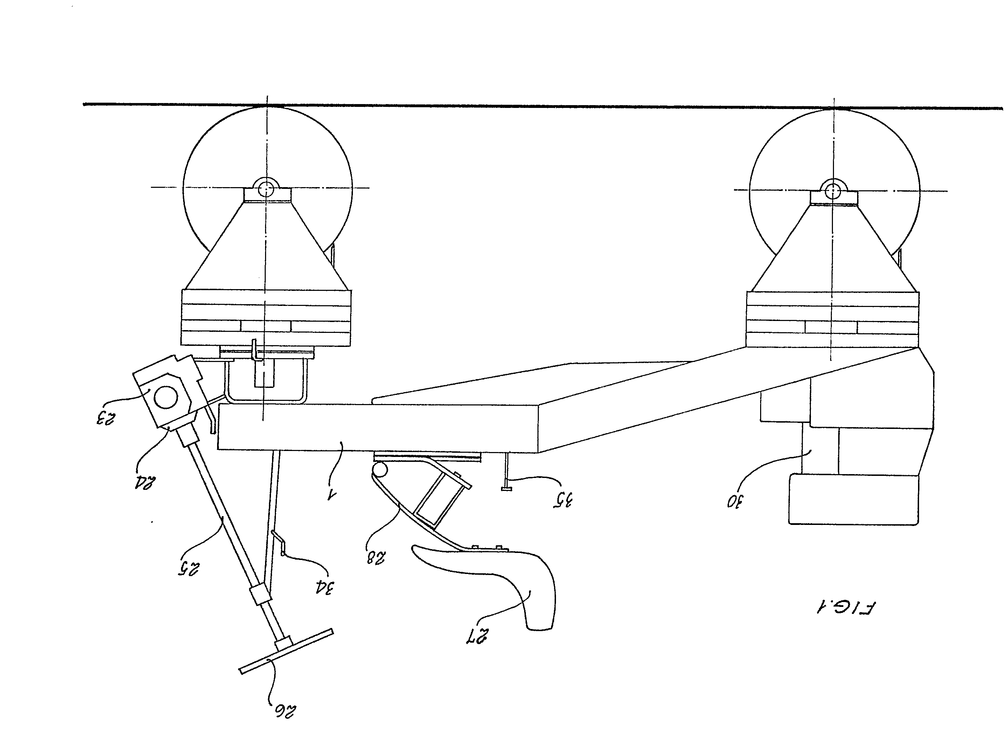

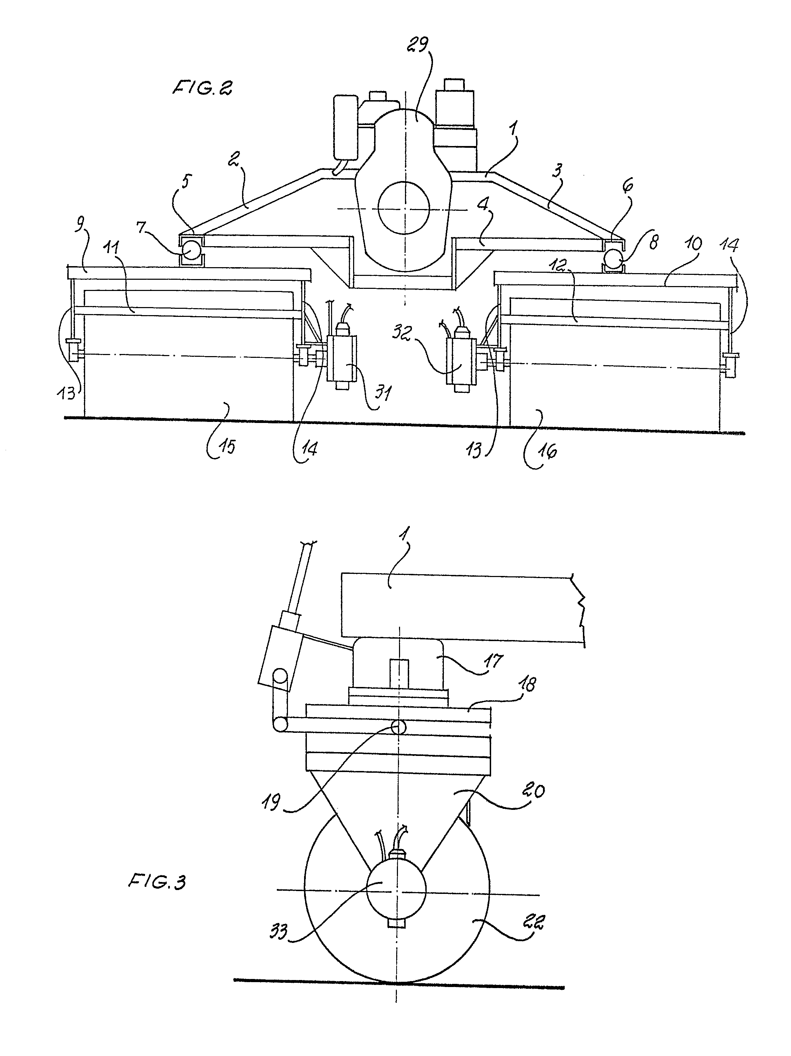

A not limiting execution form is illustrated by the drawings of Tables 1 and 2, where Fig.1 is the side right view of the machine showing the frame form, the front part of which permits on its

top to support the device in steerage station and the back one foresees the aileron couple supporting the two back line roller bearing frames. Fig. 2 is the rear view of the machine showing the line frame couple, each frame supported on an articulated joint and bearing the back roller couple. The two hydraulic motors can be noted which can drive the said rear rollers and are driven by the motor assembly fitted above in central position. Fig.3 is the left side view of the front part to show the front roller also equipped with hydraulic motor and sustained on couple of triangular supports on a casing with rotating emplacement apt to allow the manoeuvrability of the device by means of a wheel on steerage station. The version foresees the flat front part in rolled steel section 1 with continuous prosecution towards the rear part by means of ailerons 2 and 3 downwards with completion of the frame form according to back form 4. On the vertices of 4, articulated joints 7 and 8 are foreseen on "U"-shaped sections 5 and 6, which support frames 9 and 10 equipped with scrapers 11 and 12. These frames bear rollers 15 and 16 on couples of triangular supports 13 and 14. On the front side, parallel section frame 1 bears turning emplacement 17 which supports roller 22 by means of articulated joint 19 on structure 18 and on triangular fork supports 20 and 21. Emplacement 17 supports box 23 of steer 24 with column 25 and wheel 26. Seat 27 is foreseen fitted on elastic supports 28 for steerage. The movement is allowed by motor assembly 29 which drives pump 30 with changing delivery for driving hydraulic motors 31, 32 and 33 which motorize the three rollers separately. Accelleration lever 34 has to be acted on for driving and then advancement lever 35 which, if pushed forward, lets the machine proceed, respectively to rear if brought in the other sense.

Practically, the execution particulars, the frame form, the disposition and employ of the articulated supports, the motor organs, the components of steerage and manoeuvre devices may be different.

Claims:

1) Self-propelled compressing machine for agricultural working, characterized by the fact that a single-body frame is foreseen with isosceles triangle base in rolled steel section, with flat front part, which on its top forms the supporting base for the steerage station and below it bears the front roller of the dri ving device on a turning emplacement and articulated device. As back prosecution, the frame employs an aileron couple symmetrical ly diverging downwards and gradually widening to support, on the vertices of the frame end part, by means of articulated joints, a symmetrical couple of frames laid on a line, each of which su stains one of the two rollers of which the back side of the dri ving device is consisting, on a couple of triangular supports. The employ of the triangular base frame and the driving device con sisting of three rollers mainly thus fitted permits to carry out a balancing base ground contact in the form of an isosceles tra peze ensuring a high stability against upsetting and the ribbon compression of the ground which allows the transmission of a load uniformly distributed and centered thus avoiding unbalancing the seeded product. The employ of the self-propelled means excludes the use of a tractor with the separate rolling device.

2) Self-propelled compressing machine for agricultural working, according to the previous claim, characterized by the fact that three movement rollers are foreseen on articulated joints with a view permitting a constant adjustement of each roller to the changing ground slops thus allowing to maintain the constant ad- hesion of the rollers to the ground.

3) Self-propelled compressing machine for agricultural working, according to the previous claims, characterized by the fact that in order to increase power of the means and particularly the movement capacities in multidirectional sense, each roller has been foreseen equipped with separate hydraulic motor to be driven by means of motor assembly with changing delivery pump.

4) Self-propelled compressing machine for agricultural working, according to the previous claims, characterized by the fact that in a version, the flat front part 1 of the frame has been foreseen having, as a prosecution, ailerons 2 and 3 with back connection as per form 4. On the tops of part 4, articulated joints 7 and 8 are foreseen on "U"-shaped sections 5 and 6 sustaining frames 9 and 10 equipped with scrapers 11 and 12. These frames bear rollers 15 and16 on couples of triangular supports 13 and 14.

5) Self-propelled compressing machine for agricultural working, as per the previous claims, characterized by the fact that the front part 1 of the frame sustains the rotating emplacement 17 which, by means of articulation 19, holds the fork structure with triangular supports 20 and 21 bearing roller 22.

6) Self-propelled compressing machine for agricultural working, according to the previous claims, characterized by the fact that emplacement 17 supports box 23 of the steering device 24 with column 25 of wheel 26.

7) Self-propelled compressing machine for agricultural working, according to the previous claims, characterized by the fact that seat 27 fitted on elastic supports 28 is used for steerage.

8) Self-propelled compressing machine for agricultural working, according to the previous claims, characterized by the fact that movement is allowed by the motor assembly 29 which drives pump 30 with variable delivery for driving hydraulic motors 31, 32 and 33.

9) Self-propelled compressing machine for agricultural working, according to the previous claims, characterized by the fact that for driving, the acceleration lever 34 must at first be acted on and then movement lever 35 which, if pushed in one sense, causes the machine progress, and the rear movement if shifted in the contrary sense.

FIG.1

FIG.2

FIG.3

European Patent
Office

# EUROPEAN SEARCH REPORT

| Category | DOCUMENTS CONSIDERED TO BE RELEVANT | | CLASSIFICATION OF THE APPLICATION (Int. Cl.³) |
| --- | --- | --- | --- |
| | Citation of document with indication, where appropriate, of relevant passages | Relevant to claim | |
| | US - A - 2 230 317 (P. ZETTELMEYER) <br> * page 1, lines 37 to 51; fig. 1 * <br> -- <br> DE - U - 1 883 439 (B. KALTENEGGER) <br> * page 2, line 10 to page 4, line 8; fig. 1,2 * <br> -- | 1,5,6 <br><br><br> 1,2 | A 01 B 29/00 <br> E 01 C 19/26 |
| A | CH - A - 376 950 (ABG-WERKE GMBH) <br> * page 1, lines 1 to 59; fig. 1,2 * <br> ---- | 1 | |

**TECHNICAL FIELDS SEARCHED (Int. Cl.³)**

A 01 B 29/00

E 01 C 19/00

E 02 D 3/026

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | | |
| --- | --- | --- | --- |
| | The present search report has been drawn up for all claims | | |
| Place of search | Date of completion of the search | Examiner | |
| Berlin | 11-01-1982 | SCHOFER | |